# EUROPÄISCHE PATENTSCHRIFT

(11) **EP 2 229 681 B1**
(45) Veröffentlichungstag und Bekanntmachung des Hinweises auf die Patenterteilung: **30.10.2013**
(21) Anmeldenummer: 08858970.0
(22) Anmeldetag: 27.11.2008
(51) Int. Cl.: G21C 19/317, G21C 9/06

(54) **REKOMBINATORELEMENT**
RECOMBINER ELEMENT
ÉLÉMENT RECOMBINEUR

(30) Priorität: 12.12.2007 DE 102007060372
(43) Veröffentlichungstag der Anmeldung: 22.09.2010
(73) Patentinhaber: AREVA GmbH, 91052 Erlangen (DE)
(72) Erfinder: ECKARDT, Bernd, 63486 Bruchköbel (DE); BETZ, Richard, 63683 Ortenberg (DE); HILL, Axel, 64589 Stockstadt (DE)
(74) Vertreter: Tergau & Walkenhorst
(86) Internationale Anmeldenummer: PCT/EP2008/010046
(87) Internationale Veröffentlichungsnummer: WO 2009/074228

(56) Entgegenhaltungen:
- EP-B- 0 596 964
- DE-C1- 4 428 956
- US-B1- 6 942 846
- V. D. KELLER: "Passive Catalytic Hydrogen Recombiners for Nuclear Power Stations" THERMAL ENGINEERING, Bd. 54, Nr. 3, März 2007 (2007-03), Seiten 236-239, XP002533258

## Beschreibung

Die Erfindung bezieht sich auf ein Rekombinatorelement, insbesondere zum Einsatz in einem Sicherheitssystem für eine kerntechnische Anlage, mit einer Anzahl von in einem gemeinsamen Gehäuse angeordneten Katalysatorelementen, die jeweils bei in einem anströmenden Gasstrom mitgeführtem Wasserstoff eine Rekombinationsreaktion mit Sauerstoff auslösen, wobei das Gehäuse die darin angeordneten Katalysatorelemente kaminartig derart umgibt, dass die bei der Rekombinationsreaktion freigesetzte Wärme die Gasströmung innerhalb des Gehäuses durch Konvektion unterstützt.

In einer kerntechnischen Anlage, insbesondere in einem Kernkraftwerk, muss bei Stör- oder Unfallsituationen, bei denen beispielsweise aufgrund von Kemaufheizung eine Oxidation von Zirkonium auftreten kann, mit der Bildung und Freisetzung von Wasserstoffgas und Kohlenmonoxid innerhalb des den Reaktorkem umschließenden Sicherheitsbehälters oder Containments gerechnet werden. Insbesondere nach einem Kühlmitlelverluststörfall können dabei große Mengen an Wasserstoff freigesetzt werden. Dadurch können innerhalb des Containments explosive Gasgemische entstehen. Ohne Gegenmaßnahme ist dabei die Anreicherung von Wasserstoff in der Containment-Atmosphäre soweit möglich, dass bei einer zufälligen Zündung durch die Verbrennung einer größeren Menge an Wasserstoff die Integrität des Sicherheitsbehälters gefährdet sein könnte.

Zur Verhinderung der Bildung derartiger explosiver Gasgemische im Containment eines Kernkraftwerks werden verschiedene Einrichtungen oder Verfahren diskutiert. Hierzu gehören beispielsweise Einrichtungen wie katalytische Rekombinatoren, Katalytisch und/oder elektrisch betriebene Zündeinrichtungen oder die Kombination der beiden vorgenannten Einrichtungen sowie Verfahren einer permanenten Inertisierung des Containments.

Beim Einsatz eines Zündsystems zur Beseitigung des Wasserstoffs aus der Atmosphäre des Containments soll eine zuverlässige Rekombination des Wasserstoffs mit Sauerstoff mittels einer kontrollierten Verbrennung erreicht werden. Dabei soll ein signifikanter Druckaufbau als Folge einer virulenten Wasserstoffverbrennung sicher vermieden werden. Ein derartiges Zündsystem ist dabei üblicherweise derart ausgelegt, dass auch bereits beim Überschreiten der unteren Zündgrenze eines Gasgemisches, also bei einem Gasgemisch mit vergleichsweise geringer Wasserstoffkonzentration, oder beim Unterschreiten der Inertisierungsgrenze von ca. 55Vol% Dampf und auch hohen Wasserstoffkonzentrationen, eine zuverlässige Zündung des Wasserstoffs gewährleistet ist.

Ein aus der EP 289 907 B1 bekanntes Zündsystem zur gesteuerten Zündung eines Wasserstoff enthaltenden Gasgemischs umfasst einen Funkenzünder, der über einen integrierten Energiespeicher bespeisbar ist. Das Zündsystem ist dabei mit einem autark ausgelegten Energiespeicher versehen, so dass keine Zuleitungen erforderlich sind. Als Energiespeicher ist dabei insbesondere eine Trockenbatterie vorgesehen. Allerdings ist dieses Zündsystem aufgrund der Kapazität des integrierten Energiespeichers lediglich für eine begrenzte Laufzeit geeignet. Dies führt weiterhin dazu, dass in dem Konzentrationsbereich von z.B. 5 bis etwa 8 Vol% grundsätzlich eine flammlose katalytische Oxidation durch frühzeitige Zündung verhindert wird. Ein vorteilhafter flammloser katalytischer Abbau bei höheren Konzentrationen sowie die gleichzeitige Schaffung von Hochtemperaturregionen (> 600 - 900°C) ist somit ausgeschlossen.

Der Bereich der flammlosen Katalyse wird damit praktisch auf den nichtzündbaren Bereich reduziert und bereits bei leichten Konzentrationsunterschieden eine frühzeitige Einzelzündung mit schnellen Gasverschiebevorgängen ausgelöst, ohne dass - aufgrund der fehlenden Hochtemperaturregionen - eine wirksame Gegenzündung zur Ereichung kurzer Flammbeschleunigungswege, ermöglicht wird. Weiterhin ist bei einer frühzeitigen Anregung des Funkenzünders bei einem Störveriauf mit späterer Wasserstofffreisetzung eine gesteuerte Zündung des Wasserstoffs nur eingeschränkt möglich. Zudem reagiert dieses Zündsystem ebenfalls erst nach Ablauf einer Zündverzugszeit auf die Freisetzung von Wasserstoff. Auch ist ein Langzeitbetrieb des Zündsystems, der zur Abdeckung aller denkbaren Störfallsszenarien erforderlich wäre, nur mit Einschränkungen möglich. Weiterhin ist eine vorsorgliche Anregung des Zündsystems bereits im Vorfeld eines sich anbahnenden Störfalles von einer externen Station, wie beispielsweise der Leitwarte einer Kraftwerksanlage, aus nicht möglich.

Darüber hinaus besteht bei ausschließlich auf dem Einsatz von Zündverfahren für den Wasserstoff, beispielsweise in Form von Zündkerzensystemen, beruhenden Sicherheitssystemen die zusätzliche Einschränkung, dass in dampfinerten Situationen keinerlei Wasserstoffabbau betrieben werden kann. Dementsprechend kann im Sicherheitsbehälter anfallender Wasserstoff bei derartigen Systemen erst nach entsprechender Dampfkondensation vollständig verbrannt werden. Dies kann bei Wasserstoffanreicherung im Dampf zu vergleichsweise hohen Wasserstoffmengen oder -konzentrationen führen, die dann in Folge der Zündung in vergleichsweise kurzer Zeit verbrannt werden, so dass unkontrollierte Reaktionsabläufe entstehen könnten. Zudem ist bei ausschließlich auf Zündung beruhenden Systemen zu berücksichtigen, dass bei sogenannten "Station-black-out"-Szenarien, also Szenarien mit vollständigem Verlust der Energieversorgung innerhalb des Containments, die Zündung komplett ausfallen könnte.

Alternativ oder ergänzend können daher im Rahmen eines Sicherheitssystems im Sicherheitsbehälter oder Containment einer kerntechnischen Anlage so genannte passive autokatalytische Rekombinatoren angeordnet sein. Diese umfassen üblicherweise geeignete Katalysatorelemente, die auf katalytischem Wege bei in einem anströmenden Gasstrom mitgeführtem Wasserstoff eine Rekombinations reaktion mit Sauerstoff auslösen. Die Katalysatorelemente sind dabei üblicherweise mit einem umgebenden Gehäuse versehen, wobei das Gehäuse in der Art eines Kamins derart ausgestaltet ist, dass aufgrund der Kaminwirkung selbsttätig eine Konvektionsströmung innerhalb des Gehäuses entsteht, so dass das Gasgemisch zuverlässig am jeweiligen Katalysator-element entlang geführt wird und somit die katalytische Rekombinationsreaktion aufrechterhalten werden kann. Die eigentlichen katalytischen Elemente sind hierbei innerhalb des jeweiligen katalytischen Rekombinatorelements vorwiegend vertikal und weitgehend parallel angeordnet, um zwischen den Elementen den Auftrieb zu erzeugen und zu begünstigen. Bei Anfall von Wasserstoff im Gasgemisch des Containments starten diese Einrichtungen üblicherweise selbsttätig und oxidieren den Wasserstoff mit in der Atmosphäre enthaltenem Sauerstoff, so dass insbesondere auch bei Vorliegen von dampfinerten Bedingungen oder leicht oberhalb der Zündgrenze liegenden Gasgemischen ein wirksamer Wasserstoffabbau ohne Zündung erreicht werden kann.

Allerdings können auch in derartigen Systemen bei postulierten Störfallszenarien mit hohen Wasserstoff- Freisetzungsraten und gleichzeitig geringen Dampfkonzentrationen im Sicherheitsbehälter lokal oder global kritische Konzentrationen und Mengen an anfallendem Wasserstoff erreicht werden.

Da die Zündung an solchen Rekombinatoren bislang nur zufällig bei unterschiedlichen Atmosphärenbedingungen wie Wasserstoff-Konzentrationen, Dampfanteilen etc. beobachtet wurde, ist weder eine zuverlässige Vermeidung ungewollter Zündungen noch eine Sicherstellung der Zündfunktion durch solche Einrichtungen gegeben. Weiterhin wurde in Untersuchungen von bis zu 30 min Zeitverzögerung bis zum Erreichen der maximalen Reaktionstemperaturen an solchen Katalysatoreinheiten berichtet. Auch Maßnahmen zur völligen Vermeidung von Katalysatorzündungen wie z.B. durch reduzierte Beschichtungsdichten oder Diffusionshemmschichten etc., führten im höheren Konzentrationsbereich nicht zum sicheren Auschluß von ungewollten Zündungen. Selbst wenn dieser Nachweis gelungen wäre, sind zufällige Zündungen grundsätzlich, aufgrund denkbarer anderer unstetiger Zündquellen im Containment, nicht generell ausschließbar.

Zur sicherheitstechnischen Auslegung eines Containments wird daher bei der Verwendung katalytischer Rekombinatoren jeweils die bei einer Wasserstoff-Überspeisung auftretende maximale Konzentration im Sicherheitsbehälter ermittelt und unter diesen Bedingungen eine Zündung unterstellt. Bei derartigen Zündszenarien ist mit der Ausbildung von schnellen Deflagrationen bis möglicherweise hin zu Deflagrations-Detonations-Übergängen zu rechnen. Um selbst die dabei theoretisch auftretenden erheblichen Lasten und Differenzdrücke von bis zu mehreren bar durch die strukturelle Auslegung des Containments geeignet kompensieren zu können, werden die entsprechenden Strukturen des Containments sowie die darin vorgesehenen Einbauten üblicherweise entsprechend massiv ausgelegt. Wünschenswert wäre daher eine abgewandelte Auslegung eines Sicherheitssystems, bei dem selbst bei den genannten Bedingungen zuverlässig eine zu große Anreicherung von Wasserstoff in der Atmosphäre von vornherein ausgeschlossen und somit die genannten Zünd- oder Detonationsszenarien sicher vermieden werden können.

Um derartigen Bestrebungen entgegen zu kommen, können auch kombinierte Systeme vorgesehen sein, die sowohl Zünder als auch katalytische Rekombinatoren umfassen. Aus der EP 596 964 B1 ist beispielsweise ein kombiniertes Katalysator-Zündsystem zur Rekombination von Wasserstoff in einem Gasgemisch bekannt. Bei diesem System wird bei der katalytischen Rekombination von Wasserstoff die an einem Katalysatorkörper gewonnene Wärme einer Zündvorrichtung zugeleitet und dort zur Zündung von nichtabgereicherten wasserstoffhaltigen Gasen verwendet. Bei einem derartigen kombinierten Katalysator-Zündsystem tritt die Zündung des Wasserstoffs jedoch erst nach dem Ablauf einer Zündverzugszeit nach der Freisetzung des Wasserstoffs ein. Nach der ersten Freisetzung des Wasserstoffs ist nämlich eine gewisse Zeit erforderlich, bis sich der Katalysatorkörper inkl. der angrenzenden Zündeinrichtung hinreichend erwärmt hat, um eine Zündung des Wasserstoffs zu ermöglichen. Diese Zeitverzögerung führt dazu, dass bei schnellen Gasverschiebevorgängen innerhalb des Containments die Zündung des Wasserstoffs erst bei vergleichsweise hohen Wasserstoffkonzentrationen einsetzt.

Nach Erwärmung des kompletten Systems tritt dann jedoch an den nichtkatalytischen Teilen eine frühe Zündung bereits nach Überschreiten der unteren Zündgrenze auf. Dies führt dazu, dass in dem Konzentrationsbereich von z.B. 5 Vol% bis etwa 10 Vol% grundsätzlich eine flammlose katalytische Oxidation durch frühzeitige Zündung verhindert wird. Ein flammloser katalytischer Abbau bei höheren Konzentrationen sowie die gleichzeitige Schaffung von Hochtemperaturregionen ist somit ausgeschlossen.

Der Bereich der flammlosen Katalyse wird damit praktisch auf den nichtzündbaren Bereich reduziert, und bereits bei leichten Konzentrationsunterschieden werden frühzeitige Einzelzündungen mit schnellen Gasverschiebevorgängen ausgelöst, ohne dassaufgrund der fehlenden Hochtemperaturregionen - eine wirksame Gegenzündung zur Ereichung kurzer Flammbeschleunigungswege ermöglicht wird.

In anderen kombinierten Systemen mit katalytischen Rekombinatoren und mit einer Vielzahl von autonomen Funkenzündern, bei denen die Zündung unabhängig von der katalytischen Rekombination in einer Zündeinrichtung eingeleitet wird, ist mit vergleichsweise großem Aufwand durch eine entsprechende Abstimmung der Systeme aufeinander zu rechnen und insbesondere die Handhabung ungünstiger Auswirkung bei falscher Zündfrequenz problematisch. Im Prinzip gilt hier wiederum, dass frühe Einzelzündungen mit entsprechenden Gasverschiebevorgängen ausgelöst werden, ohne dass - aufgrund der fehlenden Hochtemperaturpotentiale - eine wirksame Gegenzündung zur Sicherstellung kurzer Flammbeschleunigungswege, ermöglicht wird.

In der DE 44 28 956 C1 ist ein weiteres kombiniertes System mit katalytischen Rekombinatoren und Zündern offenbart, wobei zusätzlich auch Mittel zur Strömungslenkung in Form einer stromabwärts der Zünder angeordneten Zwischenraumabdeckung vorgesehen sein können.

Der Erfindung liegt daher die Aufgabe zugrunde, ein Rekombinatorelement der oben genannten Art, insbesondere zum Einsatz in einem Sicherheitssystem in einer kerntechnischen Anlage, anzugeben, mit dem auch unter Zugrundelegung von vergleichsweise extremen Bedingungen oder Szenarien der genannten Art mit besonders hoher betrieblicher Sicherheit eine zuverlässige Beseitigung des Wasserstoffs aus dem Gasgemisch gewährleistet ist.

Diese Aufgabe wird erfindungsgemäß durch die Merkmale des Anspruchs 1 gelöst.

Die Erfindung ergeht dabei von der Überlegung aus, dass eine zuverlässige Beseitigung des Wasserstoffs unter den genannten möglicherweise extremalen Bedingungen unter zuverlässiger Vermeidung der Ausbildung kritischer Konzentrationen und unter konsequentem Ausschluss von Detonations-Szenarien erreichbar ist, indem ein im Wesentlichen auf einer katalytischen Rekombination beruhendes System in besonders geeigneter Weise durch gezielt eingeleitete Zündungen ergänzt wird. Dazu sollte auch das Zündsystem zur Einhaltung besonders hoher betrieblicher Sicherheitsstandards und auch zur Beherrschung von "Black-out"-Szenarien vollständig oder zumindest weit gehend passiv ausgebildet sein. Eine derart gezielte Ergänzung eines aus katalytischen Rekombinatoren beruhenden Systems durch geeignete Zündmechanismen ist erreichbar, indem in besonders geeigneter Weise die bei der katalytischen Rekombination lokal im Bereich der Katalysatorelemente freigesetzte Wärme zur gezielten Einleitung von Zündungen genutzt wird.

Das System sollte dabei in seiner Gesamtheit insbesondere derart ausgelegt sein, dass auch bei trockenen Szenarien mit moderater Wasserstoffreisetzung und vergleichsweise geringen Dampfanteilen frühzeitig ein katalytischer Wasserstoffabbau, insbesondere noch bei unkritischen Konzentrationen von beispielsweise 6 bis etwa 8 Vol.% Wasserstoff, eingeleitet wird. Dieser flammlose Rekombinatorbetrieb soll bei höheren Dampfkonzentrationen von z.B. > 30 Vol % bis auf ca >8 Vol% Wasserstoffkonzentration, bei > 40 Vol % vorzugsweise bis etwa 10 Vol% und mehr Wasserstoffkonzentration, ausgedehnt werden. Hierdurch wird erreicht, dass in einer Vielzahl von Szenarien überhaupt keine Zündung auftritt. Erst in extremeren Szenarien, insbesondere bei Auftreten von relevanten Wasserstoff-Mengen mit Konzentrationen oberhalb von etwa 8 Vol.-%, in jedem Fall jedoch bei Wasserstoffkonzentrationen von mehr als 10 Vol.-%, sollte vorsorglich ein weiterer Konzentrationsanstieg verhindert und gezielt selbsttätig eine Zündung in den verschiedenen Raumbereichen des Sicherheitsbehälters ausgelöst werden.

Um dies zuverlässig und unter Vermeidung einer als zu hoch angesehenen Zündverzugszeit sicherzustellen, ist nunmehr vorgesehen, mittels einer geeigneten strukturellen Positionierung und Dimensionierung der Katalysatorelemente und des sie umgebenden Gehäuses und einer geeigneten strukturellen Auslegung, insbesondere hinsichtlich Vorgabe der Strömungswege und Dimensionierung der dafür vorgesehenen Komponenten, gezielt das Strömungs- und Zündverhalten eines mit Wasserstoff angereicherten Gasstroms im Bereich der jeweiligen katalytischen Elemente zu nutzen. Dabei wird der zuströmende Wasserstoff in der Anlaufphase der Reaktion, auch bei niedrigeren Temperaturen, durch ein katalytisch besonders effektives System umgesetzt, an den vorzugsweise geringen Massen eine schnelle Temperaturerhöhung erreicht und somit die katalytische Reaktion weiter beschleunigt und damit eine umgebende Grenzschicht aufgebaut.

Dabei liegt die Erkenntnis zugrunde, dass bei einem katalytischen Rekombinator der genannten Art, bei dem, beispielsweise in Folge von Kaminwirkungen oder dergleichen, der Gasstrom mit einer bestimmten Strömungsgeschwindigkeit an den katalytischen Elementen entlang geführt und damit die Rekombinationsreaktion eingeleitet und aufrechterhalten wird, im Gleichgewichtszustand des Katalysators, also insbesondere im Betriebszustand der Naturkonvektion,vorzugsweise im laminaren Strömungsbereich, nun mit schnell ablaufender Rekombinationsreaktion, eine dickere Grenzschicht aufbaut werden kann und somit eine Abreicherung des Wasserstoffanteils im Gasstrom unmittelbar benachbart zu den katalytisch aktiven Oberflächen erfolgt. Dies ist eine Folge der nun im Gleichgewichtszustand des Katalysators bei den erhöhten Temperaturen sehr schnellen kinetischen Rekombinationsreaktion am Katalysator und der gleichzeitig limitierenden Gasdiffusionsvorgänge, die unmittelbar im Grenzbereich der katalytisch aktiven Oberfläche zum vorbei geführten Gasstrom aufgrund der Umsetzung des dort mitgeführten Wasserstoffs mit Sauerstoff zu einer loka len Verarmung des Wasserstoff- und Sauerstoffanteils in unmittelbarer Nähe zum Katalysator- und quasi zum Aufbau einer Schutzschicht - führt.

Die Einrichtung wird somit in geeigneter Weise so dimensioniert, das insbesondere in der Konzentrationsanstiegsphase, bereits bei noch nicht zündfähigen Gemischen, eine schnelle und gleichmäßige Aufwärmung im Soll-Zündzonenbereich erfolgt, die Kinetik der katalytische Reaktion dann entsprechend beschleunigt wird und somit wirkungsvoll eine komplette Konzentrations-Schutzschicht um die Hochtemperatur- Sollzündzone gelegt wird.

Die durch die katalytische Rekombinationsreaktion erzeugte Wärme, die den Katalysator entsprechend aufheizt, kann also in einem derartigen Gleichgewichtszustand nur dann zu einer Zündung des umströmenden Gasstroms führen, wenn selbst in der verarmten Zone noch ein im Hinblick auf die im Katalysatorelement herrschende Temperatur zur Zündung ausreichender Wasserstoffanteil des Gasgemischs vorliegt. Dies kann bei der gewollten Einleitung von Zündungen für besonders kurz gehaltene Zündverzugszeiten genutzt werden, indem durch geeignete strukturelle Auslegung der Komponenten in dafür vorgesehenen Bereich, also einer Soll-Zündzone, bereits während des Naturkonvektions-Betriebs Temperaturen oberhalb der Zündtemperatur von Wasserstoff, also oberhalb von etwa 560°C, eingestellt oder aufrechterhalten werden. Die Zündung in einem derartigen Bereich mit überkritischen Bedingungen erfolgt dabei ohne nennenswerte Verzugszeit, sobald nicht wesentlich verarmtes und somit zündfähiges Gasgemisch ausreichend nahe an die jeweiligen Bereiche gelangt. Bei höheren Temperaturen ist weiterhin zu beachten, dass das Zündgebiet sich an der unteren und oberen Zündgrenze eines Wasserstoffgemisches noch ausweitet und damit ein leichter Trend zu einer eine frühere Zündung zu beobachten ist.

Eine Zündung kann dabei insbesondere durch Gasverschiebevorgänge ausgelöst werden, in deren Folge zündfähiges Gasgemisch in die unmittelbare Umgebung der jeweiligen Soll-Zündzone gelangt. Durch die Einstellung der genannten Bedingungen in der Soll-Zündzone in der Art eines "überkritischen" Zustands reagiert das System in diesem Bereich somit vergleichsweise schnell und empfindlich auf Gasverschiebevorgänge jeglicher Art, so dass Zündungen bereits im Vorfeld sich anbahnender großräumiger Störungen schnell und sicher ausgelöst werden.

Die vorgesehene Einstellung der Oberflächentemperatur in der Soll-Zündzone kann dabei insbesondere durch geeignete strukturelle Auslegung der jeweiligen Katalysatorelemente und der benachbarten Komponenten erfolgen. Dabei können insbesondere die auslegungsgemäß während des Konvektionsbetriebs durch die Rekombinationsreaktion freigesetzte, die Katalysatorelemente aufheizende Wärme sowie die entsprechende Wärmeableitung, insbesondere in Form von Strahlungswärme und die Wärmeleitung über direkt angekoppelte Komponenten, berücksichtigt werden. Die sich einstellende Temperatur kann dabei insbesondere durch geeignete Geometrie- und Dimensionierungswahl der jeweiligen Komponenten im Hinblick auf die jeweilige Wärmeleitfähigkeit geeignet beeinflusst werden. Das System könnte dabei bedarfsweise im Bereich der Soll-Zündzone zur zuverlässigen Einstellung der genannten Oberflächentemperatur mit einer Zusatzbeheizung versehen sein. Für eine besonders hohe betriebliche Sicherheit ist das System jedoch vorteilhafterweise als vollständig passives System ausgeführt, bei dem die sich einstellende Temperatur im wesentlichen durch die bei der Rekombinationsreaktion freigesetzte Wärme und die entsprechende Zuleitung in den Bereich der Soll-Zündzone gegeben ist.

Vorteilhafterweise ist das System dabei derart ausgelegt, dass sich bei der Soll-Zündzone im Konvektionsbetrieb bei einem Umgebungsbedingungen von etwa 1 bar und 100°C bei einer Wasserstoffkonzentration im anströmenden Gasstrom von mehr als 5 Vol% eine Oberflächentemperatur zwischen 600°C und 900°C einstellt.

Zur Sicherstellung ausreichend hoher Temperaturen im Inneren des Gehäuses sind vorteilhafterweise innerhalb des Gehäuses mindestens drei, vorzugsweise mindestens zehn, Katalysatorelemente angeordnet.

Um eine zuverlässige Rekombinationsreaktion zu erzeugen, ist das oder jedes Katalysatorelement vorzugsweise geeignet ausgestaltet.

Insbesondere weist dazu das oder jedes Katalysatorelement jeweils eine katalytisch aktive Zone aus porösem Material, vorzugsweise aus Al₂O₃, auf, wobei das poröse Material in weiterer vorteilhafter Ausgestaltung als keramisches Wash Coat-Porensystem, gegebenenfalls zusätzlich mit einer geeigneten etch-coat-Haftschicht zur Erreichung ausreichender Abriebfestigkeit, auf einen geeigneten Träger, vorzugsweise auf einen dünnen metallischen Träger mit Al-Anteil aufgebracht ist. Dadurch kann eine die katalytische Wirkung begünstigende Vergrößerung der inneren Oberfläche, vorzugsweise um mehr als den Faktor 1000, besonders vorteilhaft um mehr als den Faktor 10000, erreicht werden. Das poröse Material der katalytisch aktiven Zone ist dabei in weiterer vorteilhafter Ausgestaltung mit Katalysatormaterial, vorzugsweise mit Pt und/oder Pd, dotiert, wobei die Pt- und/oder Pd-Verteilung zweckmäßigerweise zur Vermeidung einer Desaktivierung durch Katalysatorgifte oder dergleichen weitgehend homogen auch in die tiefer liegenden Bereiche des Porensystems ausgelegt ist.

Für eine besonders günstige katalytische Wirkung ist für die Edelmetallkonzentration dabei vorteilhafterweise eine Überdotierung von 2 bis 10, insbesondere von bis zu 25 g/m², vorgesehen. Im Bereich der Soll-Zündzone ist die Dotierung vorteilhafterweise höher als im übrigen katalytisch aktiven Bereich.

Die katalytisch aktiven Materialien, insbesondere Platin und/oder Palladium, können auf geschlossenen metallischen Trägern, auf perforierten Trägern, oder auch auf keramischen Trägern, z. B. Kugeln oder Pellets, dotiert und als Schüttung innerhalb geeigneter metallischer Rahmen-Stützstrukturen angebracht sein.

Die Belegungsdichte mit den katalytisch aktiven Edelmetallen kann dabei auch lokal und insbesondere über die Durchströmhöhe variabel gehalten sein, so dass im Hinblick auf die Rekombinationsreaktion unter anderem hierdurch Ort und Höhe der sich einstellenden Oberflächentemperatur und somit auch die Lage der Soll-Zündzone beeinflusst werden kann.

Günstigerweise kann beispielsweise auf diese Art die Soll-Zündzone im Einströmbereich der Katalysatorelemente lokalisiert sein. Beispielsweise kann hierbei im Bereich der Sollzündzone eine erhöhte Anreicherung von Katalysatormaterial erfolgen, besonders günstig aus den beiden katalytischen Elementen Pt und Pd.

Vorteilhafterweise sind die Katalysatorelemente hauptsächlich im unteren Bereich des Rekombinatorelements angeordnet, so dass durch die infolge des Rekombinationsprozesses anfallende Wärme die Kaminwirkung und damit die Konvektionsströmung innerhalb des Gehäuses besonders unterstützt wird. Vorteilhafterweise und für besonders günstige Strömungsverhältnisse weist das Rekombinatorelement in seinem Einströmbereich eine freie Querschnittsfläche, also einen Anteil der vom Gasstrom frei durchströmbaren Querschnittsfläche an der Gesamt-Querschnittsfläche, von mehr als 40%, vorzugsweise von mehr als 90%, auf. Durch eine Ausführung in Dünnfolientechnik ist dabei eine besonders günstige freie Querschnittsfläche von bis zu 98% möglich.

Die Einrichtung wird weiterhin in vorteilhafter Ausgestaltung mit geringen Katalysatormassen und nur verminderter Aufwärmung der nicht im katalytischen Bereiche liegenden nicht katalytischen Gehäuseteile so dimensioniert, dass insbesondere in der Konzentrationsanstiegsphase oder bereits bei noch nicht zündfähigen Gemischen eine schnelle gleichmäßige Aufwärmung erfolgt, die katalytische Reaktion dann entsprechend beschleunigt wird und somit im Anströmberich wirkungsvoll eine komplette Konzentrations-Schutzschicht um den Hochtemperaturbereich der Soll-Zündzone gelegt werden kann.

Zur Unterstützung der Kaminwirkung und somit für besonders stabile Strömungsverhältnisse ist vorteilhafterweise ein Verhältnis von Schachttiefe zu Schachthöhe von etwa 1:3 bis 1:5 vorgesehen. Die Gesamthöhe des Rekombinatorelements kann dabei beispielsweise 0,3m bis 3m betragen.

Die Katalysatorelemente des Rekombinatorelements sind vorzugsweise als Katalysatorplatten ausgeführt, wobei diese vorzugsweise zur Begünstigung der Strömungsführung vorwiegend vertikal ausgerichtet sind. Die Katalysatorelemente sind vorzugsweise in einem Abstand von etwa 0,5cm bis 3cm zueinander und etwa in gleicher Höhe wie die Unterkante des Gehäuses, vorteilhafterweise jedoch mit ihrer Unterkante etwa oder bis zu 10 cm (höher als die Unterkante des Gehäuses) angeordnet. Die Abstände zwischen einzelnen Katalysatorelementen können auch variiert werden, so dass bei geringerem Abstand ein höherer Reaktionsgrad und somit lokal höhere Temperaturen erreicht werden. Auch dieser Parameter kann somit zur Temperaturführung und Vorgabe der Soll-Zündzone herangezogen werden. Alternativ oder zusätzlich kann durch lokal erhöhte Installationsdichte der katalytisch aktiven Flächen ein so genannter hot spot, also eine Zone erhöhter Temperatur, zur Definition der Soll-Zündzone geschaffen werden.

Für eine besonders zuverlässige Zündeinleitung sind die Katalysatorplatten vorteilhafterweise als Dünnelemente oder in Dünnfolien-Bauweise mit einer Wandstärke von weniger als 1 mm, vorzugsweise weniger als 0,2mm, partiell auch noch deutlich geringer, ausgeführt. Aufgrund der damit einhergehenden vergleichsweise geringen lokalen thermischen Trägheit ist dabei insbesondere bei transienten Vorgängen eine besonders spontane katalytische Gemischabreicherung und lokale Temperaturerhöhung erreichbar, so dass gerade auch bei transienten Gemischänderungen die gewünsche Zündfunktion besonders wirksam sichergestellt werden kann.

Durch Anwendung der Dünnfolientechnik und einen geeigneten katalytischen Aufbau kann sichergestellt werden, dass sich z.B. bei transienten Konzentrationsänderungen im Bereich von z. B oberhalb 3 Vol % Wasserstoff, eine Oberflächentemperaturanstiegsgeschwindigkeit am Katalysatorelement von >50°C/ % H2, innerhalb 30s , vorzugsweise innerhalb <10s, einstellt. Weiterhin können hierbei die Katalysatorelemente in der Sollzündzone auch so ausgeführt und angeordnet sein, dass bei transienter Einspeisung von Wasserstoff von praktisch 0 Vol % auf spontan > 6 Vol %, vorzugsweise > 8 Vol %, der Aufbau einer komplett wirksamen Konzentrationsschutzschicht kurzzeitig und partiell nicht erfolgt und sicherheitshalber eine frühzeitige Zündung erfolgt.

Dieser katalytische Wasserstoff-Abbau kann bei Wasserstoff-Konzentrationen von >8 bis 10 Vol %, bei entsprechend hohen Dampf- CO₂ Anteil von z.B. ca 40 Vol%, bei >50 - 55 Dampf- CO₂ Anteil auch bei Wasserstoff-Konzentrationen >10 Vol %, vorzugsweise erfolgen. Die duale Wirkung der Einrichtung erweist sich auch in diesen dampfinerten Bereichen, bei ca. >55 Vol % Dampf- CO₂ Anteil, als vorteilhaft, da durch die flammlose Oxidation bereits gravierend Wasserstoff abgebaut werden kann und gleichzeitig die Schaffung entsprechend hoher Temperaturpotentiale, von z.B. > 600°C, insbesondere jedoch an der von den Zündbedingungen her schwierigeren oberen Zündgrenze, auch Temperatur-potentiale von bis zu >900°C möglich werden. Durch diese hohen Temperaturen können die aufgrund der hohen Dampfanteile auftretende erhöhte Wärme-ableitung in der Zündzone kompensiert werden und auch unter diesen Bedingungen die sicher Zündung erfolgen.

Durch Kombination dieser spezifischen Rekombinationseinrichtung mit dem Betrieb eines Containmentspraysystems kann im dampfinerten Bereich eine intensive Mischung der Atmosphäre durch Sprühen und die generierten Rekombinatorkonvektionsströme erfolgen sowie gleichzeitig eine Reduktion des Wasserstoff-Anteiles erreichet werden. Insbesondere werden hierdurch mögliche kritische Hochkonzentrationswolken mit relevantem Potential zur Flammbeschleunigung kurzfristig mit der restlichen Atmosphäre vermischt und weiterhin die verschie-denen Hochtemperatur-Sollzündzonen auf ein einheitlicheres Niveau gebracht. Hierbei können besonders ausgeprägte Hochtemperaturen in den Soll-Zündzonen von >700°C, vorzugsweise >800°C eingestellt werden. Durch geeignete Messfühler können weiterhin direkt und repräsentativ die Temperaturen der Hochtemperatur Soll-Zündzonen ermittelt und die Wasserstoffkontrollstrategie, also insbesondere die Aktivierung und/oder Ansteuerung des Containment-spraysytems, auf Basis dieser Informationen entsprechend ausgerichtet werden. Die Einrichtung liefert weiterhin durch die ausgeprägte Hochtemperaturzone, auch beim Auftreten von hohen Gasgeschwindigkeiten, von z. B. >50 m/s und mehr, sehr zuverlässige spontane Zündungen. Der hierbei auftretende Kühleffekt, bedingt durch die massiv einströmende kühlere Umgebungsatmosphäre, kann durch die vorliegende Temperierung der Massen im Inneren der Einrichtung sicher kompensiert werden.

In besonders vorteilhafter Ausgestaltung ist als Soll-Zündzone ein einer katalytisch aktiven Zone gasstromseitig nachgeschalteter katalytisch nicht aktiver Bereich vorgesehen. Dabei wird die im katalytisch aktiven Bereich anfallende Wärme gezielt in den nachgeschalteten nicht aktiven Bereich geleitet. Dabei liegt die Überlegung zugrunde, dass im Abströmbereich der katalytisch aktiven Flächenbereiche aufgrund der vorangegangenen Rekombinationsreaktion ohnehin ein abgereicherter Gasstrom vorliegt. Lediglich für den Fall, dass in kurzer Zeit vergleichsweise große mit Wasserstoff angereicherte Gasmengen anfallen, also beispielsweise in Folge von Gasverschiebevorgängen innerhalb des Sicherheitsbehälters, gelangt zündfähiges Gasgemisch bis in diese Zonen, so dass eine besonders bedarfsgerechte Zündauslösung gewährleistet ist. Die Rekombinatoreinrichtung ist hierbei vorteilhafterweise so gestaltet, dass z.B. eine spontane Verdoppelung der Gasgeschwindigkeit im Soll-Zündzonenbereich, vorzugsweise auf > 5m/s, bei partiellen Katalysatorzonentemperaturen von >560°C (> vorzugsweise >600°C) und damit gezielt die Aktivierung der Zündfunktion erreicht wird.

In erfindungsgemäßer Ausgestaltung des Rekombinatorelements sind dem oder den Katalysatorelementen gasstromseitig Mittel zur Strömungsfokussierung vorgeschaltet. Damit kann sichergestellt werden, dass externe Gasverschiebevorgänge in der Sicherheitshülle geeignet fokussiert und verstärkt in einem Gaszustrom an den Katalysatorelementen oder insbesondere im Bereich der Soll-Zündzone resultieren, so dass gerade in derartigen Situationen die Verarmungszone in der Gasströmung im Bereich der Soll-Zündzone aufgebrochen und die Zündung zuverlässig ausgelöst wird. Die Fokussierung kann dabei durch geeignete Leitbleche oder sonstige Umlenkungsmittel, durch Mittel zur Turbulenzerzeugung, durch spiralförmige Konfusoren und/oder durch Querschnittsreduzierungen erreicht oder unterstützt werden. Insbesondere können derartige Einrichtungen in allen Hauptrichtungen im unteren Teil des Gehäuses, vertikal oder horizontal am Gehäuse oder auch integriert in die Katalysatorelemente angeordnet sein. Die Katalysatoreinrichtung kann weiterhin mit einem voll- oder teilweise geschlossenen Rohr- oder Kanalsystem verbunden sein. Durch Aufgabe eines Druckpulses kann hierbei über ein solches Rohrelement, beispielsweise auch kombiniert mit einen Ejektor, zur Ansaugung von Umgebungsluft, gezielt eine Erhöhung der Gasgeschwindigkeiten im Bereich der Soll-Zündzone erfolgen und die Zündung gewollt ausgelöst werden.

Vorzugsweise ist das Rekombinatorelement in einem Sicherheitssystem einer kerntechnischen Anlage eingesetzt.

Die mit der Erfindung erzielten Vorteile bestehen insbesondere darin, dass durch die Bereitstellung einer Soll-Zündzone mit im Konvektionsbetrieb überkritischer, also oberhalb der Zündtemperatur für den Wasserstoff liegender, Oberflächentemperatur gezielt die Erkenntnis, dass sich in Katalysatomähe eine Grenzschicht mit abgereichertem Wasserstoffgehalt bildet, zur Gewährleistung besonders zuverlässiger und schneller Zündvorgänge genutzt werden kann. Eine Zündung kann in einem derartigen System insbesondere dann schnell und zuverlässig ausgelöst werden, wenn aufgrund der Strömungsverhältnisse die Abreicherungsschicht aufgebrochen wird. Dies ist insbesondere dann der Fall, wenn ein eintreffender Druckpuls oder Gasverschiebevorgang im Einströmbereich des Rekombinatorelements oder im Bereich der Soll-Zündzone derart hohe Gasströmungsgeschwindigkeiten erzeugt, dass die in unmittelbarer Nähe der katalytischen Oberfläche befindliche Gasschicht mit abgereichertem oder vermindertem Wasserstoffgehalt aufgebrochen wird. Dadurch kann nunmehr nicht oder nur wenig abgereichertes Gas direkten Kontakt mit den vergleichsweise heißen Oberflächen des katalytischen Elements bekommen, so dass hierdurch zuverlässig eine Zündung in diesem Raumbereich ausgelöst wird.

Damit ist das Rekombinatorelement insbesondere in Sicherheitssystemen gut nutzbar, in denen Übersprecheffekte zwischen einzelnen Rekombinatoren, bei denen eine Zündung in einem Rekombinator durch die von einem anderen Rekombinator eintreffende Flammenfront ausgelöst wird, im Hinblick auf die damit verbundenen Instabilitäten vermieden werden sollen. Dadurch, dass bei langsamen Deflagrationen die dabei erzeugten Druckwellen mit vergleichsweise langer Schwingungsdauer und geringer Amplitude der entsprechenden Flammenfront voran laufen, wird nämlich durch die hierdurch bewirkten Gasverschiebevorgänge die Zündung im Rekombinator ausgelöst, bevor die Flammenfront eintrifft. Die massive Brenngaszufuhr führt somit zu einer Überspeisung der lokalen Rekombinatoreinrichtung und zu einer Minimierung der Konzentrationsabreicherung im Grenzschichtbereich der Heizflächen und an der Phasengrenze zu einer Grenzflächenstörung, so dass zusätzlich weitere konvektive Ströme hervorgerufen und eine sichere Zündung ermöglicht werden. Damit ist eine Sicherheitszündung kritischer Bereiche vor einer weiteren Konzentrationserhöhung sichergestellt, wobei in der Art eines Dominoeffekts oder einer Dominozündung ausgehend von einer ersten Rekombinatoreinrichtung Zündungen in benachbarten oder sich strömungsseitig anschließenden Rekombinatoreinrichtungen sicher ausgelöst werden. Übersprecheffekte und unkontrollierte Strömungsverhältnisse können dadurch sicher vermieden werden, so dass eine Minimierung der in Kauf zu nehmenden Lasten erfolgt.

Dementsprechend kann das System in seiner Gesamtheit mit einem Schwerpunkt auf der katalytischen Funktion des Wasserstoffabbaus ausgelegt sein, wobei in vergleichsweise vielen Szenarien, also insbesondere bei Konzentrationen von weniger als 8 - 10 Vol.-% und entsprechenden Dampfkonzentrationen, unter Verzicht auf Zündungen ein Wasserstoffabbau ausschließlich katalytisch erfolgen kann. Bei höheren Konzentrationen erfolgen Zündungen und Verbrennungsvorgänge primär im Konzentrationsbereich oder Anlaufbereich von langsamen Deflagrationen, wobei sichere Zündvorgänge in benachbarten Einrichtungen in Folge der den Verbrennungswellen oder Flammenfronten mit Abstand vorlaufenden Gasverschiebevorgänge eingeleitet werden.

Ein Ausführungsbeispiel der Erfindung wird anhand einer Zeichnung näher erläutert. Darin zeigen:
- Figur 1: ein Sicherheitssystem zur Rekombination von Wasserstoff und Sauerstoff in einem Gasgemisch,
- Figur 2: einen katalytischen Rekombinator im Längsschnitt, und
- Figur 3: den Rekombinator nach Figur 2 in seitlicher Ansicht.

Gleiche Teile sind in allen Figuren mit denselben Bezugszeichen versehen.

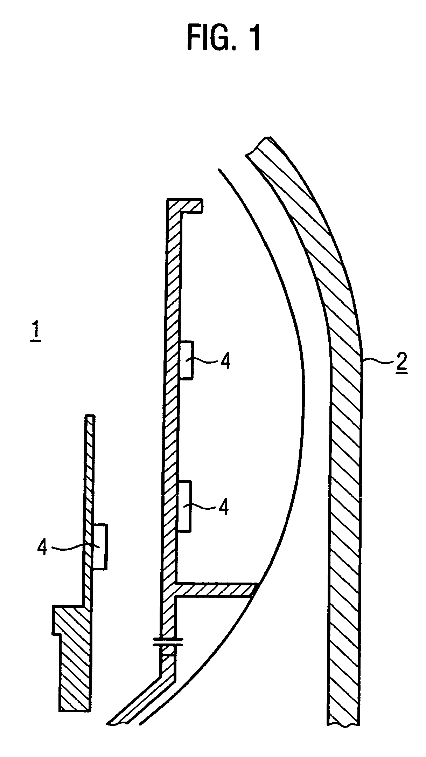

Das Sicherheitssystem 1 gemäß Figur 1 ist zur Rekombination von Wasserstoff in einem Gasgemisch, nämlich in der Containment-Atmosphäre eines in Figur 1 auszugsweise dargestellten Sicherbehälters 2 einer kerntechnischen Anlage, vorgesehen. Das Sicherheitssystem 1 umfasst dazu eine Anzahl von innerhalb des Sicherheitsbehälters 2 angeordneten katalytischen Rekombinatorelementen 4, von denen jedes auf katalytischem Wege eine Rekombinationsreaktion von in einem vorbeiströmenden Gasstrom mitgeführtem Wasserstoff mit in der Contain ment-Atmosphäre enthaltenem Sauerstoff auslöst.

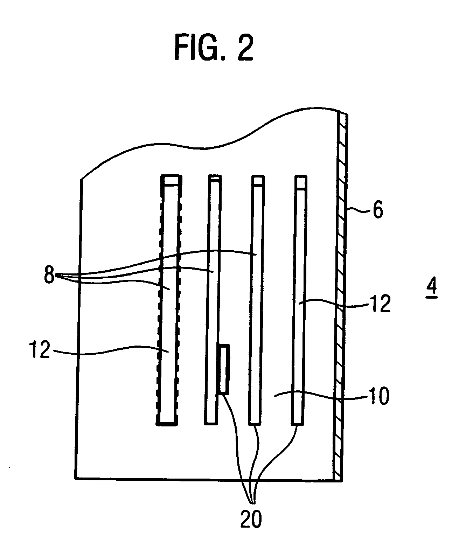

Dazu umfasst jedes der thermischen Rekombinatorelemente 4, wie in der vergrößerten Darstellung in Fig. 2 erkennbar ist, eine Anzahl von in einem Gehäuse 6 angeordneten Katalysatorelementen 8. In Fig. 2 sind dabei der Übersicht halber vier Katalysatorelemente 8 sichtbar, wobei im Ausführungsbeispiel aber insbesondere zehn oder mehr Katalysatorelemente 8 in einem gemeinsamen Gehäuse 6 angeordnet sind. Die Katalysatorelemente 8 weisen dabei jeweils eine mit einem geeignet gewählten Material, beispielsweise Palladium und/oder Platin, versehene Oberfläche auf, die in einem angrenzenden Gasgemisch für den Fall, dass dieses Gasgemisch signifikante Wasserstoffanteile von beispielsweise einigen Volumenprozent enthält, eine katalytische Rekombinationsreaktion mit im Atmosphärengas enthaltenem Sauerstoff auslösen. Dabei unterläuft der Wasserstoff mit dem Sauerstoff unter Bildung von Was ser eine exotherme Reaktion. Durch diese exotherme Reaktion werden die Katalysatorelemente 8 ihrerseits aufgewärmt, so dass in Folge des dadurch entstehenden Temperaturgefälles eine Konvektionsströmung von unten nach oben im umgebenden Gasraum entsteht.

Zur Unterstützung dieser Konvektionsströmung durch den so genannten Kamineffekt ist das die Katalysatorelemente 8 umgebende Gehäuse 6 des jeweiligen Rekombinatorelements 4 geeignet, insbesondere kaminartig, ausgestaltet, und zur weiteren Erleichterung der dadurch entstehenden Konvektionsströmung sind die Katalysatorelemente 8 im Wesentlichen plattenartig ausgebildet und parallel zueinander angeordnet. Weiterhin weist das Rekombinatorelement 4 eine Gesamthöhe von etwa 3m und ein Verhältnis von Schachttiefe und Schachthöhe von 1:3 bis 1:5 auf. Im Einströmbereich 10 für den Gasstrom weist das Rekombinatorelement 4 zudem einen Anteil an frei durchströmbarer, also nicht von den Einbauten behinderter Querschnittsfläche von etwa 90% auf. In der Gesamtheit weist das aus diesen Komponenten gebildete Rekombinatorelement 4 somit strukturelle Eigenschaften auf, die bei der Anwesenheit von Wasserstoff im Atmosphärengas des Sicherheitsbehälters 2 selbsttätig einen katalytischen Rekombinationsprozess starten und durch die unterstützende Wirkung der Konvektionsströmung in Folge des Kamineffekts aufrechterhalten und eine weitere Durchmischung der Atmosphäre bewirken, bis ein ausreichender Abbau des Wasserstoffs stattgefunden hat.

Das Katalysatorelement 8 weist jeweils eine katalytisch aktive Zone 12 aus porösem Material, insbesondere aus Al₂O₃, auf. Das poröse Material ist dabei als keramisches Wash Coat-Porensystem zusätzlich mit einer geeigneten etch-coat-Haftschicht zur Erreichung ausreichender Abriebfestigkeit auf einen geeigneten dünnen metallischen Träger mit Al-Anteil aufgebracht. Dadurch ist eine die katalytische Wirkung begünstigende Vergrößerung der inneren Oberfläche um mehr als den Faktor 10000 sichergestellt. Das poröse Material der katalytisch aktiven Zone 12 ist dabei mit Katalysatormaterial, insbesondere mit Pt und/oder Pd, dotiert, wobei die Pt- und/oder Pd-Verteilung zur Vermeidung einer Desaktivierung durch Katalysatorgifte oder dergleichen weitgehend homogen auch in die tiefer liegenden Bereiche des Porensystems ausgelegt ist.

Für eine besonders günstige katalytische Wirkung ist für die Edelmetallkonzentration dabei eine Überdotierung von bis zu 25 g/m², vorgesehen.

Das Sicherheitssystem 1 ist in seiner Gesamtheit dafür ausgelegt, bei einer Vielzahl von möglichen Störfallszenarien unter Einschluss auch vergleichsweise unwahrscheinlicher extremaler Störfallbedingungen eine sichere und zuverlässige Rekombination des dabei möglicherweise in der Atmosphäre des Sicherheitsbehälters 2 erzeugten Wasserstoffs zu gewährleisten. Dazu ist das Sicherheitssystem 1 zum Abbau von Wasserstoff mit dem Schwerpunkt auf katalytische Rekombination ausgelegt, wobei im Bedarfsfall und insbesondere lokal begrenzt ergänzend auch eine Zündung zündfähigen Gasgemisches erfolgen soll. Dazu sind die katalytische Rekombinatorelemente 4 hinsichtlich Art, Positionierung und Dimensionierung ihrer Komponenten vorwiegend derart ausgestaltet, dass bei Gasgemischen mit einer Wasserstoffkonzentration von bis zu etwa 6 Volumenprozent oder bedarfsweise auch bis zu etwa 8 Volumenprozent, bei höheren Dampf-konzentrationen bis >10 Vol% noch keine Zündung erfolgt, sondern der Wasserstoffabbau durch die katalytisch ausgelöste Rekombinationsreaktion an der Oberfläche der Katalysatorelemente 8 erfolgt.

Für höhere Wasserstoffkonzentration ist hingegen ergänzend vorgesehen, dass die Katalysatorelemente 8 in Folge der durch die katalytische Rekombinationsreaktion freigesetzten thermischen Energie derart aufgeheizt werden, dass ihre Temperatur in der Art sogenannter "Hotspots" an dafür vorgesehenen Soll-Zündzonen 20, die bevorzugt direkt im Anströmbereich des Katalysators liegen, ober-halb der Zündtemperatur des Gasgemisches liegt und somit eine Zündung des Gasgemischs in der Art eines passiven Systems selbsttätig ausgelöst den Rekombinationsprozess unterstützt. Dabei ist durch Anordnung, Struktur und Dimensionierung der Einbauten innerhalb des Gehäuses 6, insbesondere der Katalysatorelemente 8, unter Berücksichtigung der bei der Rekombinationsreaktion freigesetzten Wärme und der Wärmeableitung in Folge von Strahlungswärme oder auch in Form von Wärmeleitung über die einzelnen Komponenten das System derart ausgelegt, dass sich unter Referenzbedingungen im Konvektionsbetrieb des jeweiligen Rekombinatorelements 4 bei einem Umgebungsbedingungen von etwa 1 bar und 100°C einer Wasserstoffkonzentration im die Katalysatorelemente 8 anströmenden Gasstrom von mehr als 5 Vol.% eine Oberflächen-temperatur in der Soll-Zündzone 20 zwischen 600°C und 900°C, also von mehr als der Zündtemperatur von Wasserstoff von etwa 560°C, einstellt.

Bei dieser Auslegung der Rekombinatorelemente 4 ist der Erkenntnis Rechnung getragen, dass jedes der Katalysatorelementen 8, die zum Teil auch partiell metallisch ummantelt sein können, im katalytischen Rekombinationsbetrieb, also bei vorliegender Naturkonvektion, von dem behandlungsbedürftigen Gasstrom umströmt wird, wobei in unmittelbarer Nähe der katalytischen Oberflächen der Katalysatorelemente 8 in Folge der ablaufenden Rekombinationsreaktion eine Abreicherung des Wasserstoffanteils im Gasstrom erfolgt. Im Zustand der Naturkonvektion werden die Katalysatorelemente 8 somit in der Art eines geschichteten Gasstroms direkt vom abgereichertem Gas kontaktiert, wobei in weiter entfernt liegenden Raumbereichen nicht abgereichertes Gas mit entsprechend erhöhtem Wasserstoffanteil vorliegt. In diesem Zustand der Naturkonvektion ist somit der Zündeffekt, den das erhitzte Katalysatormaterial auf den umgebenden Gasstrom ausüben kann, durch die abgereicherte Gasschicht vermindert.

Dieser Effekt ist in den Rekombinatorelementen 4 dazu genutzt, die Soll-Zündstellen 20 im Bedarfsfall, also insbesondere im Zustand der Naturkonvektion, in der Art eines überkritischen Modus zu betreiben, bei dem eine eigentlich oberhalb der Zündgrenze liegende Oberflächentemperatur herrscht. In einem derartigen Zustand ist das System somit vergleichsweise empfindlich auf Störungen der Strömungsverhältnisse, wobei für den Fall, dass die die überhitzten Oberflächenteile berührende abgereicherte Gasschicht aufgebrochen wird und nicht abgereichertes Gas diese Oberflächenteile erreichen kann, spontan eine Zündung aufgrund der erhöhten Temperatur ausgelöst wird. Durch diese Ausgestaltung des Systems ist somit bei die Strömungsverhältnisse im unmittelbaren Nahbereich der Katalysatorelemente 8 störenden Druckpulsen oder Gasverschiebevorgängen spontan und ohne nennenswerte Zündverzugszeit die Auslösung einer Zündung erreichbar. Damit kann insbesondere eine selbsttätige und passive Zündung für den Fall sichergestellt werden, dass innerhalb des Sicherheitsbehälters 2 Druckpulse auftreten, so dass eine zuverlässige Zündung bereits im Vorfeld sich möglicherweise anbahnender Störfälle oder dergleichen ausgelöst werden kann.

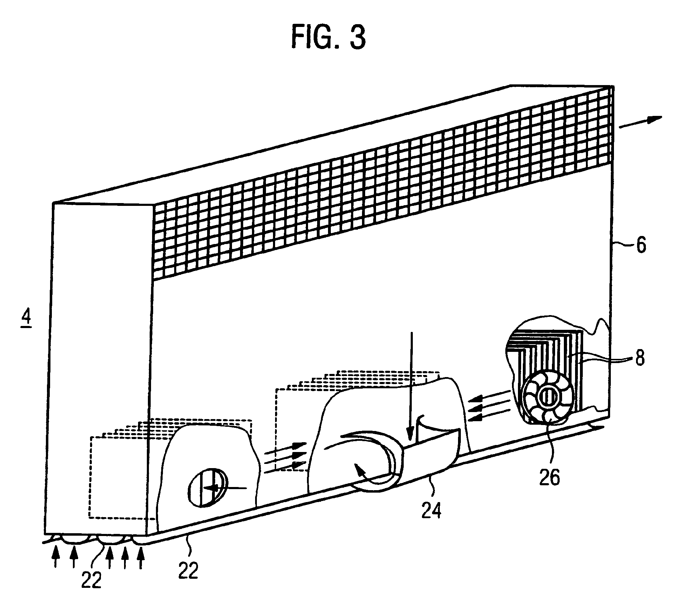

Um die Empfindlichkeit des Systems gegenüber Druckpulsen oder Gasverschiebevorgängen oder dergleichen und damit die Zuverlässigkeit und Sicherheit der einzuleitenden der Zündungen noch weiter zu steigern, werden in einzelnen Katalysatorelementen 8 geeignete Mittel zur Strömungsfokusierung vorgeschaltet sein, die eine gezielte Zuleitung eintreffender Druckpulse oder Gasströme auf die Soll-Zündzonen 20 begünstigen oder verstärken. Dazu können, wie in der Darstellung nach Fig. 3 entnehmbar ist, den im Gehäuse 6 angeordneten Katalysatorelementen 8 als geeignete Mittel zur Strömungsführung Leitbleche 22, Umlenkbleche 24, Wirbel oder Turbulenzerzeuger 26 oder andere geeignete Mittel oder Konfusoren vorgesehen sein, mit denen ein eintreffender Druckpuls gezielt auf den Raumbereich in der Nähe der Soll-Zündzone geleitet wird.

### Bezugszeichenliste

- 1: Sicherheitssystem
- 2: Sicherheitsbehälter
- 4: Rekombinatorelement
- 6: Gehäuse
- 8: Katalysatorelement
- 10: Einströmbereich
- 12: aktive Zone
- 20: Soll-Zündzone
- 26: Turbulenzerzeuger

## Patentansprüche

1. Rekombinatorelement (4) mit einer Anzahl von in einem gemeinsamen Gehäuse (6) angeordneten Katalysatorelementen (8), die jeweils bei in einem anströmenden Gasstrom mitgeführtem Wasserstoff eine Rekombinationsreaktion mit Sauerstoff auslösen, wobei das Gehäuse (6) die darin angeordneten Katalysatorelemente (8) kaminartig derart umgibt, dass die bei der Rekombinationsreaktion freigesetzte Wärme die Gasströmung innerhalb des Gehäuses (6) durch Konvektion unterstützt, und wobei zumindest eines der innerhalb des Gehäuses (6) angeordneten Katalysatorelemente (8) eine Soll-Zündzone (20) aufweist,
**dadurch gekennzeichnet,**
**dass** das Katalysatorelement (8) eine katalytische aktive Zone aus porösem Material enthält, welches derart gewählt ist, dass sich an der Soll-Zündzone (20) im Konvektionsbetrieb bei Umgebungsbedingungen von etwa 1 bar und 100 °C und bei einer Wasserstoffkonzentration im anströmenden Gasstrom von mehr als 5 Vol.% eine Oberflächentemperatur oberhalb der bei diesen Bedingungen vorliegenden Zündtemperatur von 560 °C einstellt,
und **dass** dem Katalysatorelement (8) gasstromseitig Mittel zur Strömungsfokussierung aus der Gruppe umfassend Leitbleche, Umlenkbleche und Turbulenzerzeuger vorgeschaltet sind, die eine gezielte Zuleitung eintreffender Druckpulse auf die Soll-Zündzone begünstigen.

2. Rekombinatorelement (4) nach Anspruch 1, bei dem sich bei der Soll-Zündzone (20) im Konvektionsbetrieb bei Umgebungsbedingungen von etwa 1 bar und 100 °C und bei einer Wasserstoffkonzentration im anströmenden Gasstrom von mehr als 5 Vol.-% eine Oberflächentemperatur zwischen 600 °C und 900 °C einstellt.

3. Rekombinatorelement (4) nach Anspruch 1 oder 2, bei dem innerhalb des Gehäuses (6) mindestens drei, vorzugsweise mindestens zehn, Katalysatorelemente (8) angeordnet sind.

4. Rekombinatorelement (4) nach einem der Ansprüche 1 bis 3, bei dem das oder jedes Katalysatorelement (8) jeweils eine katalytisch aktive Zone (12) aus porösem Material, vorzugsweise aus Al₂O₃, aufweist.

5. Rekombinatorelement (4) nach Anspruch 4, bei dem das poröse Material der katalytisch aktiven Zone (12) mit Katalysatormaterial, vorzugsweise mit Pt und/oder Pd, dotiert ist.

6. Rekombinatorelement (4) nach einem der Ansprüche 1 bis 5, das in seinem Einströmbereich einen Anteil der vom Gasstrom frei durchströmbaren, also nicht von Einbauten behinderter Querschnittsfläche an der Gesamt-Querschnittsfläche von mehr als 40 %, vorzugsweise von mehr als 90 %, aufweist.

7. Rekombinatorelement (4) nach einem der Ansprüche 1 bis 6, dessen Katalysatorelemente (8) als Katalysatorplatten ausgeführt sind.

8. Rekombinatorelement (4) nach Anspruch 7, bei dem die Katalysatorplatten als Dünnelemente mit einer Wandstärke von weniger als 1 mm, vorzugsweise weniger als 0,2 mm, ausgeführt sind.

9. Rekombinatorelement (4) nach einem der Ansprüche 1 bis 8, bei dem die Katalysatorelementmasse im Anströmbereich so dimensioniert und angeordnet ist, dass sich bei transienten Konzentrationsänderungen z.B. oberhalb von 3 Wasserstoff-Vol.% eine Oberflächentemperaturanstiegsgeschwindigkeit am Katalysatorelement von > 50 °C pro % Wasserstoff innerhalb 30 s, vorzugsweise innerhalb 10 s, einstellt.

## Claims

1. A recombiner element (4) comprising a plurality of catalyst elements (8) that are arranged in a common housing (6) and that trigger a recombination reaction with oxygen when hydrogen is carried along in a feed gas flow, the housing (6) surrounding the catalyst elements (8), which are arranged therein, in a funnel-like way in such a manner that the heat released by the recombination reaction supports the gas flow inside the housing (6) by a convection effect, and wherein at least one of the catalyst elements (8) arranged inside the housing (6) has a predetermined ignition zone (20),
**characterized in that**
the catalyst element (8) includes a catalytically active zone of porous material which is chosen such that, at the predetermined ignition zone (20) in convective operation at ambient conditions of approximately 1 bar and 100°C and at a hydrogen concentration in the feed gas flow of more than 5 % by volume, a surface temperature lying above the ignition temperature present under these conditions, of 560°C is produced,
and that means for the flow focussing are connected upstream of the catalyst element (8) on the gas-flow side, which are chosen from the group comprising baffle plates, directional baffles, and turbulence generators, which support a selective feeding of incoming pressure pulses to the predetermined ignition zone (20).

2. The recombiner element (4) of claim 1, wherein a surface temperature between 600°C and 900°C is produced at the predetermined ignition zone (20) in convective operation at ambient conditions of approximately 1 bar and 100°C and with a hydrogen concentration in the feed-gas flow of more than 5 % by volume.

3. The recombiner element (4) of claim 1 or 2, wherein at least three, preferably at least ten, catalyst elements (8) are arranged inside the housing (6).

4. The recombiner element (4) according to any of the preceding claims 1 to 3, wherein the or each catalyst element (8) includes a catalytically active zone (12) consisting of porous material, preferably of Al₂O₃.

5. The recombiner element (4) of claim 4, wherein the porous material of the catalytically active zone (12) is doped with a catalytic material, preferably with Pt and/or Pd.

6. The recombiner element (4) according to any of claims 1 to 5, which has in its inlet area a cross-sectional area which can be freely flowed through by the gas flow, i.e. which is not obstructed by things built in, whose portion of the overall cross-sectional area amounts to more than 40 %, preferably to more than 90 %.

7. The recombiner element (4) according to any of claims 1 to 6, whose catalyst elements (8) are designed as catalyst plates.

8. The recombiner element (4) of claim 7, wherein the catalyst plates are configured as thin elements having a wall thickness of less than 1 mm, preferably of less than 0.2 mm.

9. The recombiner element (4) according to any of claims 1 to 8, wherein the catalyst element mass in the feed area is dimensioned and arranged in such a manner that a surface-temperature increase rate on the catalyst element of > 50°C per % hydrogen is produced within 30 s, preferably within 10 s, during transient concentration changes, e.g. above 3 % by volume of hydrogen.

## Revendications

1. Elément recombineur (4) comprenant une pluralité d'éléments catalyseurs (8) qui sont disposés dans un boîtier (6) commun et qui déclenchent une réaction de recombinaison avec l'oxygène lorsque de l'hydrogène est entraîné dans un flux de gaz entrant, le boîtier (6) entourant les éléments catalyseurs (8) disposés là-dedans, à la manière d'une cheminée, de telle façon que la chaleur libérée lors de la réaction de recombinaison assite le flux de gaz dans le boîtier (6) par convection, et dans lequel au moins un des éléments catalyseurs (8) disposés dans le boîtier (6) présente une zone d'allumage de consigne (20),
**caractérisé en ce que**
l'élément catalyseur (8) comprend une zone catalytiquement active faite d'un matériau poreux qui est choisi de telle façon que, à la zone d'allumage de consigne (20) en mode de convection dans des conditions ambiantes d'environ 1 bar et 100°C et avec une concentration d'hydrogène dans le flux de gaz entrant de plus de 5 % volumétriques, une température de surface supérieure à la température d'allumage régnante dans ces conditions, de 560°C se produit,
et **en ce que** des moyens pour la concentration du flux sont placés en amont de l'élément catalyseur (8) du côté du flux de gaz, qui sont choisis parmi le groupe comprenant des tôles de chicane, des tôles déflecteurs et des générateurs de turbulences, qui assistent une amenée sélective d'impulsions de pression entrantes à la zone d'allumage de consigne (20).

2. Elément recombineur (4) selon la revendication 1, dans lequel une température de surface entre 600°C et 900°C se produit à la zone d'allumage de consigne (20) en mode de convection dans des conditions ambiantes d'environ 1 bar et 100°C et avec une concentration d'hydrogène dans le flux de gaz entrant de plus de 5 % volumétriques.

3. Elément recombineur (4) selon la revendication 1 ou 2, dans lequel au moins trois, de préférence au moins dix, éléments catalyseurs (8) sont disposés dans le boîtier (6).

4. Elément recombineur (4) selon l'une quelconque des revendications précédentes 1 à 3, dans lequel le ou chaque élément catalyseur (8) comprend une zone catalytiquement active (12) consistant en un matériau poreux, de préférence en Al₂O₃.

5. Elément recombineur (4) selon la revendication 4, dans lequel le matériau poreux de la zone catalytiquement active (12) est dopé d'un matériau catalytique, de préférence de Pt et/ou de Pd.

6. Elément recombineur (4) selon l'une quelconque des revendications 1 à 5, qui présente dans sa zone d'entrée une superficie de section par laquelle le flux de gaz peut passer librement, c'est-à-dire qui n'est pas obturée par des objets installés, dont la part dans la superficie de section totale s'élève à plus de 40 %, de préférence à plus de 90 %.

7. Elément recombineur (4) selon l'une quelconque des revendications 1 à 6, dans lequel les éléments catalyseurs (8) sont configurés comme disques catalytiques.

8. Elément recombineur (4) selon la revendication 7, dans lequel les disques catalytiques sont configurés comme éléments minces ayant une épaisseur de paroi de moins de 1 mm, de préférence de moins de 0,2 mm.

9. Elément recombineur (4) selon l'une quelconque des revendications 1 à 8, dans lequel la masse de l'élément catalyseur dans la zone d'entrée est dimensionnée et disposée de telle façon qu'un taux d'augmentation de la température de surface sur l'élément catalyseur de > 50°C par % d'hydrogène se produit en 30 s, de préférence en 10 s, pendants des changements de concentration transitoires, p. ex. au-dessus de 3 % volumétriques d'hydrogène.
